# EUROPÄISCHE PATENTSCHRIFT

(11) **EP 1 804 996 B1**
(45) Veröffentlichungstag und Bekanntmachung des Hinweises auf die Patenterteilung: **16.03.2011**
(21) Anmeldenummer: 05801433.3
(22) Anmeldetag: 18.10.2005
(51) Int. Cl.: B29C 45/56

(54) **VERFAHREN UND VORRICHTUNG ZUM HERSTELLEN PROFILIERTER, ZUMINDEST ABSCHNITTSWEISE LÄNGLICHER BAUTEILE**
METHOD AND DEVICE FOR PRODUCING PROLIFERATED, AT LEAST SECTIONALLY ELONGATE ELEMENTS
PROCEDE ET DISPOSITIF POUR PRODUIRE DES ELEMENTS PROFILES ALLONGES SUR AU MOINS CERTAINS SEGMENTS

(30) Priorität: 21.10.2004 AT 17742004
(43) Veröffentlichungstag der Anmeldung: 11.07.2007
(73) Patentinhaber: Dipl. Ing. Gottfried Steiner, Ingenieurbüro Für Kunststofftechnik, 8724 Spielberg (AT)
(72) Erfinder: STEINER, Gottfried, A-8724 Spielberg (AT); KRIVEC, Thomas, A-8740 Zeltweg (AT)
(74) Vertreter: Vinazzer, Edith
(86) Internationale Anmeldenummer: PCT/EP2005/055343
(87) Internationale Veröffentlichungsnummer: WO 2006/045720

(56) Entgegenhaltungen:
- EP-A- 1 208 955
- US-A- 2 443 053
- US-A- 2 969 563
- PATENT ABSTRACTS OF JAPAN Bd. 1995, Nr. 08, 29. September 1995 (1995-09-29) & JP 07 112457 A (MITSUBISHI RAYON CO LTD), 2. Mai 1995 (1995-05-02) in der Anmeldung erwähnt

## Beschreibung

Die Erfindung betrifft ein Verfahren zum Herstellen profilierter, zumindest abschnittsweise länglicher Bauteile aus flüssigen oder zähflüssigen und erstarrenden Formmassen unter Verwendung einer Spritzgießform, wobei die Formmasse in ein Formnest eingespritzt wird, nach dem Auffüllen des Formnests unter fortgesetztem Einspritzen die zuvor eingespritzte Masse unter Ausdehnung eines formgebenden Bereiches und unter Verlängerung des zu bildenden Bauteils stetig wegtransportiert wird, wobei Formmasse solange eingespritzt wird bis das zu bildende Bauteil seine endgültige Länge erreicht hat, wobei die Formmasse von einem beweglichen Formeinsatz wegtransportiert wird, welcher einen äußeren Umfangsbereich des Bauteils formt und mitbildet.

Die Erfindung betrifft ferner eine Spritzgießform zum Herstellen profilierter, zumindest abschnittsweise länglicher Bauteile aus flüssigen oder zähflüssigen und erstarrenden Formmassen, wobei die Spritzgießform zwei schließ- und öffenbare, jeweils mehrere Formkomponenten aufweisende Formteile umfasst, welche zumindest ein mit der Formmasse über zumindest eine Ausgussstelle füllbares Formnest bilden, wobei in der Form zumindest ein das Formnest mitbildender Formeinsatz in Richtung der Erstreckung des zu bildenden Bauteils beweglich gelagert ist, welcher einen äußeren Umfangsbereich des Bauteils formt und mitbildet.

Es ist bekannt und üblich, längliche Bauteile aus flüssigen oder zähflüssigen Formmassen, die durch Abkühlen oder reaktiv erstarren, in Spritzgießverfahren oder Extrusionsverfahren herzustellen. Spritzgießverfahren ermöglichen die Herstellung von profilierten und relativ kompliziert geformten dreidimensionalen Bauteilen, Extrusionsverfahren gestatten das Herstellen von Bauteilen, deren Geometrie dem bei der Extrusion verwendeten Düsenquerschnitt entspricht. Die durch Extrusion hergestellten Baumteile sind oft Bestandteile oder Ausgangsteile von Produkten, die durch entsprechende Umformungs- oder Fügeprozesse, wie etwa das Ablängen eines extrudierten Profils, das Aufschweißen von Endkappen oder anderen Teilen, zum fertigen Produkt verarbeitet werden.

Ein Verfahren und eine Vorrichtung der eingangs genannten Art sind beispielsweise aus der US-A-2,443,053 bekannt. Die Vorrichtung ist darauf abgestellt, Tuben, beispielsweise für Zahnpasta oder Kosmetika, herzustellen. Es wird daher um einen zylindrischen Formteil in einer Formkavität innerhalb der Form Formmasse gespritzt, wobei beim Beginn des Spritzgießprozesses ein am zylindrischen Formteil stirnseitig befindlicher Formeinsatz das Bilden des einen Endabschnittes der Tube sicherstellt. Der zylindrische Formteil tritt gemeinsam mit dem an seiner Stirnseite positionierten Formeinsatz aus der Spritzgießform, wobei die Tube als Ummantelung des zylindrischen Formteils kontinuierlich gebildet wird. Das Dokument US-A-2,443,053 offenbart eine Verfahren und eine Vorrichtung gemäß den Oberbegriffen der Ansprüche 1 und 10.

Verfahren und Vorrichtungen, bei welchen eine Formkavität bestimmter Länge derart mit der Formmasse befüllt wird, dass ein Formeinsatz die eingefüllte Masse von der Angussstelle unter Auffüllen der Kavität weg transportiert wird, sind aus der JP T-112457, der JP 5-278082 und der DE 196 22 093 A bekannt.

Aus der EP 0 345 202 B1 ist ein Verfahren zum Spritzgießen eines länglichen Körpers, insbesondere einer Reifenlauffläche, bekannt. Dabei wird ein Abschnitt der Reifenlauffläche in einem Formnest einer Form spritzgeformt. Die Form weist ein offenes Ende auf, das durch ein Schleppende eines ausgehärteten Abschnittes verschlossen wird. Ein die Temperatur moderierendes geschlossenes Ende verhindert die vollständige Aushärtung des Schleppbereiches des gespritzten Abschnittes, während der Rest des Abschnittes aushärtet. Nachdem der Abschnitt ausgehärtet ist, kann die Form geöffnet werden und der Abschnitt kann in eine Position außerhalb der Form versetzt werden. Der Schleppbereich des ausgehärteten Abschnittes wird im offenen Ende des Formnests eingeklemmt, um eine Barriere für das Spritzgießen des nächsten Abschnittes zu bilden. Während des Spritzgießens des nächsten Abschnittes wird der Schleppbereich des ausgehärteten Abschnittes vollständig ausgehärtet und mit dem Vorderbereich des nächsten Abschnittes verbunden. Dieses Verfahren kann unbestimmt wiederholt werden, wodurch eine beliebige Länge eines Laufflächenvorrates zur Lagerung oder zur Verladung hergestellt werden kann.

Aus der US-A 3,992,503 ist ein Verfahren zur Herstellung eines gerippten Rohres aus einem thermoplastischen Material bekannt. Dabei wird ein Rohrabschnitt durch Spritzgießen in einer Formkavität zwischen zwei Formteilen hergestellt, die derart ausgeführt sind, dass die erwünschte Rippung an der Außenseite des Rohres mitgeformt wird. Nach dem Erstarren des Rohrstückes wird der äußere Formteil entfernt und das erstellte Rohrstück in Längsrichtung transportiert. Der äußere Formteil wird nun wieder positioniert, um im geschlossenen Zustand eine an das gebildete Rohrstück anschließende Formkavität zur Bildung des nächsten Rohrstückes zu bilden. Diese Verfahrensschritte werden so lange wiederholt, bis die erwünschte Länge des Rohres erreicht ist. Ein weiteres, ähnlich arbeitendes Verfahren zur abschnittsweisen Herstellung eines rohrförmigen Körpers ist aus der EP 0 018 044 A1 bekannt.

Das abschnittweise Herstellen von Bauteilen gemäß dem bekannten Stand der Technik erfordert komplizierte Mechanismen zum Öffnen und Schließen von Formteilen währen der Herstellung des Bauteils und Einrichtungen zum schrittweisen Transportieren des herzustellenden Produktes. Der Herstellaufwand ist somit sehr hoch und zeitintensiv. Die derart hergestellten Bauteile sind durch das schrittweise "Anstückeln" inhomogen, die Qualität entspricht nicht den heutigen Anforderungen an hochbeanspruchte Produkte.

Der Erfindung liegt die Aufgabe zu Grunde, ein Spritzgießverfahren und eine Spritzgießform zur Verfügung zu stellen, welche diese Nachteile nicht aufweisen und es gestatten, auch komplex profilierte, zumindest abschnittsweise längliche Bauteile endlicher Größe in hoher Qualität mit geringem Aufwand herstellen zu können.

Die Aufgabe wird durch das Verfahren nach Anspruch 1 und die Spritzgießform nach Anspruch 10 gelößt.

Was das Verfahren betrifft wird die gestellte Aufgabe erfindungsgemäß dadurch gelöst, dass der bewegliche Formeinsatz einen äußeren Umfangsbereich des Bauteils formt, welcher sich über die gesamte Länge des Bauteils erstreckt und gemeinsam mit erstarrter Masse aus der Spritzgießform austritt.

Was die Spritzgießform betrifft wird die gestellte Aufgabe erfindungsgemäß dadurch gelöst, dass der bewegliche Formeinsatz einen äußeren Umfangsbereich des Bauteils formt, welcher sich über die gesamte Länge des Bauteils erstreckt und an Führungsleisten gelagert ist, sodass er in seiner Ausgangsposition das ursprünglich geschlossene Formnest mitbildet und in seiner Endposition gemeinsam mit erstarrter Masse und der Form heraus bewegt ist.

Charakteristisch und wesentlich für das Verfahren und die Spritzgießform ist, dass, abweichend vom herkömmlichen Spritzgießverfahren, nach der volumetrischen Füllung des ursprünglichen Formnestes der entstehende Spritzling unmittelbar im Bereich der Anbindung der Angussstelle zur Formkavität kontinuierlich anwächst bzw. gebildet wird und nicht an der Fließfront, wie beim herkömmlichen Spritzgießen. Während des Einspritzvorganges wird bei der Erfindung die bereits eingespritzte und langsam erstarrende Masse, die das entstehende Profil bildet, stetig vom Angussbereich wegtransportiert. Es wächst daher ständig das Volumen der Kavität, wodurch bei der Angusstelle durch Einfüllen der Formmasse der Spritzling vergrößert wird. Auf diese Weise wächst der Spritzling kontinuierlich auf seine endgültige Länge und Form, wobei der von der Formmasse zurückzulegende Fließweg zumindest im Wesentlichen konstant bleibt. Vom herkömmlichen Extrusionsverfahren unterscheidet sich das erfindungsgemäße Verfahren grundsätzlich dadurch, dass Bauteile bestimmter Länge erzeugt werden können, deren Geometrie jedoch nicht so weit eingeschränkt ist wie bei Extrusionsverfahren. Dabei ist es möglich, die Länge der gespritzten, profilierten Bauteile von Einspritzvorgang zu Einspritzvorgang zu verändern, ohne an der Form Modifikationen oder Umbauarbeiten durchführen zu müssen. Damit sind auch Profile unterschiedlicher Längen wirtschaftlich in geringen Stückzahlen herstellbar.

Die Vergrößerung des Spritzlings unter Ausdehnung des ursprünglichen Formnestes wird auf einfache Weise dadurch erreicht, dass die eingespritzte, erstarrende Masse von einem beweglichen Formeinsatz von der Angussstelle wegtransportiert wird, welcher gemeinsam mit der erstarrten Masse aus der Spritzgießform austritt.

Bei einer möglichen Ausführungsform wird der bewegliche Formeinsatz in eine einzige Richtung linear bewegt, wodurch langgestreckte Bauteile bestimmter Länge einfach herstellbar sind.

Wird der bewegliche Formeinsatz entlang gekrümmter und/oder mit Ecken versehener Bahnen bewegt, so können kontinuierlich gekrümmte Profile oder Profile mit winkeligen Übergangsbereichen, beispielsweise Bilderrahmen und Bauteile mit platteriförmiger Geometrie, hergestellt werden.

Bei einer besonders vorteilhaften und einfachen Ausführungsform kann im Spritzling ein Hohlraum mittels eines sich gegenüber dem feststehenden Formeinsatz bewegenden Kerns gebildet werden, wobei das ursprüngliche Formnest vom Kern mitgebildet wird. Durch eine entsprechende Anzahl von Kernen können auch mehrere Hohlräume entstehen.

Dabei kann der Kern bereits in seiner Ruhestellung das ursprüngliche Formnest mitbilden, wodurch weitere Möglichkeiten der geometrischen Gestaltung des Bauteils gegeben sind.

Nach dem Auffüllen des ursprünglichen Formnestes kann die Bewegung des beweglichen Formeinsatzes und / oder des Kerns durch den Druck der eingefüllten Formmasse beeinflusst und / oder ausgelöst werden. Eine entsprechende Einstellung der Prozessparamter gewährleistet diese vorteilhafte Maßnahme.

Für das Bilden von durchgehenden Hohlräumen in länglichen Bauteilen ist es von Vorteil, wenn der Kern synchron und übereinstimmend zur Bewegung des beweglichen Formeinsatzes bewegt wird.

Über Linearantriebe lassen sich der bewegliche Formeinsatz und der Kern auf besonders zuverlässige und zweckmäßige Weise antreiben und steuern.

Beim erfindungsgemäßen Verfahren können die bereits erstarrten Bereiche des gebildeten Spritzlings gemeinsam mit dem und auch durch den beweglichen Formeinsatz und unter Loslösung vom feststehenden Formeinsatz und, falls vorhanden, unter Loslösung vom Kern aus der Form austreten. Einige wesentliche Teile der Form können daher kompakter ausgeführt werden, als es beim herkömmlichen Spritzgießen der Fall wäre, wenn Bauteile in einer größeren Länge gespritzt werden.

Einige weitere Verfahrensschritte verdeutlichen die Einfachheit des erfindungsgemäßen Verfahrens. So wird nach dem Bilden des Bauteils in der erwünschten Länge der bewegliche Formeinsatz angehalten, der Kern wird erst nach der vollständigen Erstarrung des Bauteils in seine Ausgangslage zurückgefahren. Nach dem Zurückfahren des Kerns kann dabei der von diesem gebildete Hohlraum mit einem Medium, beispielsweise mit einem Kunststoffschaum, befüllt werden. Nach dem Auswerfen des Bauteils wird schließlich auch der bewegliche Formeinsatz in seine Ausgangslage zurückgefahren.

Sind mindestens zwei Angussstellen vorgesehen, können unterschiedliche Formmassen zugeführt werden, wobei über eine dieser Angussstellen das ursprüngliche Formnest aufgefüllt wird und die Öffnung bzw. die Öffnungen zu der oder den weiteren Angussstelle(n) sukzessive während der Ausdehnung des Formnestes durch den beweglichen Formeinsatz freigegeben wird bzw. werden. Somit gestattet das erfindungsgemäße Verfahren das Aufspritzen einer weiteren oder mehrerer weiterer Komponente(n) auf bereits gespritzte Teile, wodurch sich die Vielfalt der möglichen Ausführungen der herzustellenden Bauteile nochmals erhöht.

Die erfindungsgemäße Spritzgießform gewährleistet bei einer vergleichsweise einfachen und kompakten Bauweise das Herstellen unterschiedlich geformter länglicher Bauteile mit oder ohne Hohlräume(n), mit Vertiefungen und dergleichen.

Zu den diesbezüglich vorteilhaften baulichen Maßnahmen gehört, dass der bewegliche Formeinsatz an einem der beiden Formteile verschiebbar angeordnet ist, ferner dass im anderen Formteil ein feststehender Formeinsatz angeordnet ist, welcher gemeinsam mit dem beweglich angeordneten Formeinsatz und gegebenenfalls gemeinsam mit einem am feststehenden Formeinsatz beweglich angeordneten Kern das ursprüngliche Formnest und das sich ausdehnende Formnest bildet.

Um in einer Richtung langgestreckte Bauteile herzustellen, ist es lediglich erforderlich, den beweglichen Formeinsatz an einem der beiden Formteile in einer einzigen Richtung verschiebbar anzuordnen.

Zur Herstellung kontinuierlich gekrümmter Profile oder von Profilen mit winkeligen Übergangsbereichen, beispielsweise Bilderrahmen und Bauteilen mit plattenförmiger Geometrie, braucht der bewegliche Formeinsatz an einem der beiden Formteile nur in zwei normal zueinander verlaufenden Richtungen verschiebbar angeordnet zu werden.

Wird ein Kern zum Bilden eines Hohlraumes im Bauteil vorgesehen, so kann dieser auf einfach Weise am feststehenden Formeinsatz in Ausdehnungsrichtung des Bauteils verschiebbar gelagert sein und zur Bildung des Hohlraumes im Bauteil in das Formnest ragen oder in dieses einfahrbar sein. Die verschiebbare Anordnung des Kerns am feststehenden Formeinsatz ist auf simple Weise über eine diesen durchsetzende Öffnung, Bohrung oder dergleichen möglich.

Um längliche, insbesondere rohrartig geformte Bauteile zu spritzen, ist vorgesehen, dass der bewegliche Formeinsatz und der Kern linear und vorzugsweise auch synchron bewegbar sind. Mit einer erfindungsgemäßen Form ist es auch auf einfache Weise möglich, im Spritzling bzw. Bauteil Einlegeteile, wie beispielsweise Schraubteile, gleich bei der Herstellung zu integrieren. Dazu kann vorgesehen sein, dass die Einlegeteile in das Formnest einführbar oder einlegbar sind oder dass die Einlegeteile in entsprechenden Aufnahmestellen am beweglichen Formeinsatz positionierbar sind.

Die Erfindung zeichnet sich auch dadurch aus, dass es möglich ist, Bauteile herzustellen, die zumindest in Teilbereichen dreidimensional strukturiert sind. Dies wird etwa dadurch erreicht, dass eine entsprechende dreidimensionale Struktur an Formnestoberflächen, die keine Relativbewegung zur Formmasse während des Spritzgießens durchführen, vorgesehen wird.

Weitere Merkmale, Vorteile und Einzelheiten der Erfindung werden nun anhand der Zeichnung, die einige Ausführungsbeispiele darstellt, näher beschrieben. Dabei zeigen
Fig. 1 einen Längsschnitt durch eine Ausführungsform einer erfindungsgemäß ausgeführten Spritzgießform,
Fig. 2 einen Querschnitt entlang der durch die Linie A-A der Fig. 1 gekennzeichneten Schnittebene,
Fig. 3 bis Fig. 5 zu Fig. 1 analoge Längsschnitte in unterschiedliche Stadien während des Einspritzens,
Fig. 6 im Längsschnitt die geöffnete Spritzgießform gemäß Fig. 1 nach Beendigung des Spritzgieß- bzw. Formvorganges,
Fig. 7 einen Längsschnitt durch eine weitere Ausführungsform einer erfindungsgemäßen Spritzgießform in einem Anfangsstadium des Einspritzens,
Fig. 7a eine Ansicht des in der Spritzgießform gemäß Fig. 7 entstehenden Bauteils,
Fig. 8 die Spritzgießform gemäß Fig. 7 im Längsschnitt in einem Stadium vor der Beendigung des Einspritzvorganges,
Fig. 9 einen Querschnitt entlang der durch die Linie B-B der Fig. 8 gekennzeichneten Schnittebene,
Fig. 10 die Spritzgießform gemäß Fig. 7 bis 9 in einem Stadium beim Beenden des Einspritzvorganges,
Fig. 11 eine weitere Ausführungsform einer erfindungsgemäßen Spritzgießform im Längsschnitt in einem Anfangsstadium des Einspritzvorganges,
Fig. 12 die Spritzgießform gemäß Fig. 11 in einem späteren Stadium während des Einspritzvorganges,
Fig. 13 einen Querschnitt entlang der durch die Linie C-C der Fig. 12 definierten Schnittebene und
Fig. 14 im Längsschnitt die geöffnete Spritzgießform gemäß Fig. 11 und 12 unmittelbar nach Beendigung des Spritzgieß- bzw. Formvorganges.

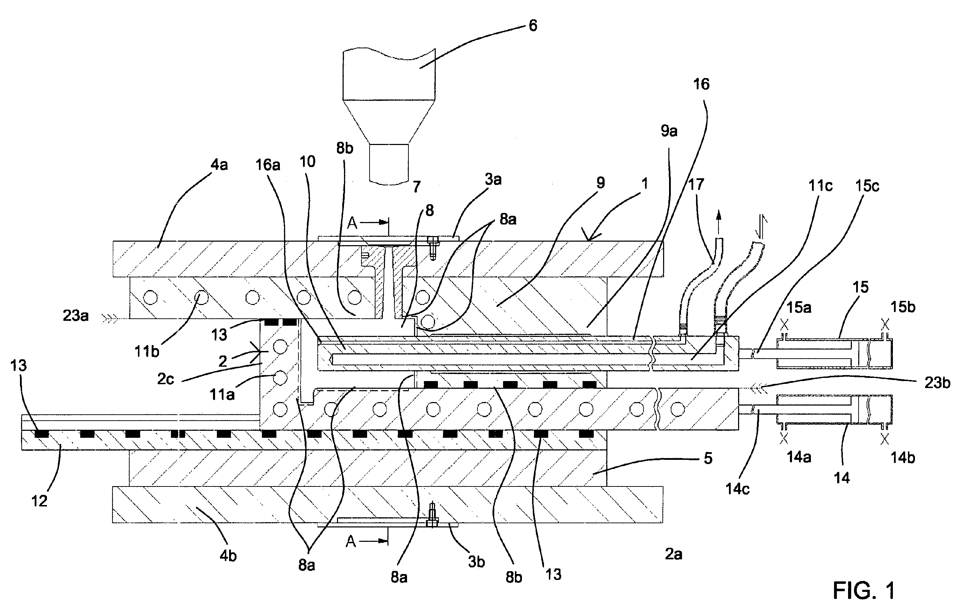

Fig. 1 bis 6 zeigen eine Ausführungsform der Erfindung, die nachfolgend näher erläutert wird. Eine Spritzgießform besteht üblicher Weise aus zwei Formteilen oder Formhälften, die zum Öffnen der Spritzgießform voneinander weg bewegt werden. Wie insbesondere Fig. 1, Fig. 2 und Fig. 6 zeigen gehören zum (oberen) Formteil ein an einer oberen Aufspannplatte 4a angeordneter, feststehender Formeinsatz 9, ein an diesem verschiebbar angeordneter Kern 10, eine den Formeinsatz 9 und die obere Aufspannplatte 4a durchsetzende Angussbuchse 7 und ein oberer Zentrierring 3a, welcher an der oberen Aufspannplatte 4a befestigt ist.

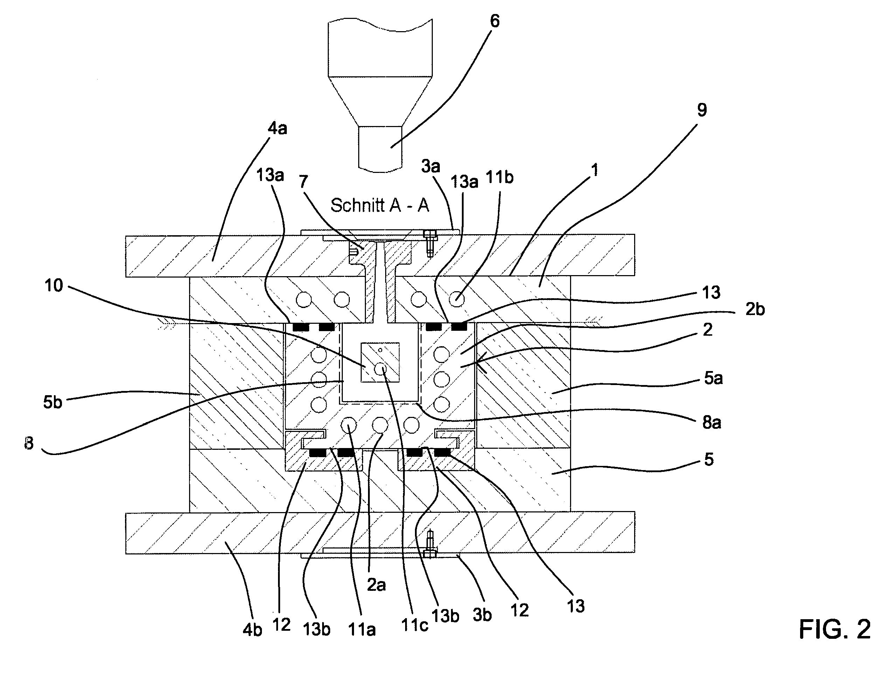

Zum (unteren) Formteil gehören eine untere Aufspannplatte 4b, ein an dieser befestigter unterer Zentrierring 3b, eine mit der Aufspannplatte 4b verbundene Formplatte 5, in Fig. 2 zu erkennende Stützleisten 5a, 5b und ein an der Formplatte 5 verschiebbar angeordneter Formeinsatz 2.

Nicht dargestellt sind weitere typische Formkomponenten, wie Führungssäulen, Auswerferelemente, Sensoren, Be- und Entlüftungselemente und dergleichen, die gemäß dem Stand der Technik ausgeführt sein können.

Wie Fig. 1 mit Verbindung von Fig. 2 zeigt, ist der Formeinsatz 9 ein plattenförmiges Bauteil mit einem Ansatz 9a, welcher zur verschieblichen Lagerung des Kerns 10 in Längsrichtung von einer rechteckförmigen Öffnung durchsetzt wird. Dieser Ansatz 9a des Formeinsatzes 9 liegt innen auf dem Basisschenkel 2a des im Querschnitt U-förmigen Formeinsatzes 2 auf, dessen beide weiteren Schenkel 2b, wie Fig. 2 zeigt, am Formeinsatz 9 anliegen. Das Formnest 8 wird zwischen einem den Ansatz 9a überragenden Endabschnitt des Kerns 10, Teilbereichen des Formeinsatzes 9, den Schenkeln 2a, 2b des Formeinsatzes 2 und einer Stirnwand 2c desselben gebildet.

Das in einem Spritzaggregat 6 plastifizierte Kunststoffmaterial wird über die Angussbuchse 7 in das Formnest 8 eingespritzt. Die Formeinsätze 2, 9 und der Kern 10 können über Kühlbohrungen 11a, 11b, 11c entsprechend temperiert werden, um den Erstarrungsvorgang des eingespritzten Materials zu beeinflussen. Die Formnestoberflächen können in jenen Bereichen 8a, die, wie noch beschrieben wird, keine Relativbewegung zum Spritzling während des Spritzgießprozesses durchführen, dreidimensional strukturiert sein. Formnestoberflächen 8b mit Relativbewegung können nur in Richtung der stattfindenden Bewegung verlaufende Strukturen aufweisen. Analoges gilt für die Oberfläche des Kerns 10. Der feststehende Formeinsatz 9 wird ferner derart ausgeführt, dass in seinen Kontaktbereichen zum beweglichen Formeinsatz 2, insbesondere im Bereich der im Strömungsschatten liegenden Wandungen des Formnestes 8, eine derartige Abdeckung gewährleistet ist, dass ein Eindringen von plastifizierten Material während des Einspritzvorganges zwischen beweglichen und feststehenden Formkomponenten verhindert wird.

Der bewegliche Formeinsatz 2 ist, wie es beispielsweise Fig. 1 und Fig. 2 zeigen, in zwei Führungsleisten 12 längsverschiebbar geführt. Der Kern 10 ist, wie bereits erwähnt, im feststehenden Formeinsatz 9 geführt. Eine Anzahl von im Formeinsatz 2, im Formeinsatz 9 und den Führungsleisten 12 eingesetzten Gleitelementen 13 erleichtert das Gleiten bzw. die noch zu beschreibende Relativbewegung zwischen dem beweglichen Formeinsatz 2 und dem feststehenden Formeinsatz 9 sowie zwischen dem beweglichen Formeinsatz 2 und den Führungsleisten 12.

Die Stützleisten 5a, 5b gewährleisten in Abhängigkeit von der jeweils wirksamen Schließkraft eine definierte Kraft an den Kontaktflächen 13a zwischen dem beweglichen Formeinsatz 2 und dem feststehenden Formeinsatz 9 sowie an den Kontaktflächen 13b zwischen den Führungsleisten 12 und dem beweglichen Formeinsatz 2 (siehe Fig. 2). Dadurch wird eine zu hohe Reibung an den Kontaktflächen 13a, 13b in Folge der anliegenden Schließkraft, die ein Blockieren des beweglichen Formeinsatzes 2 bewirken könnte, verhindert. Über in den Stützleisten angeordnete Druckaufnehmer kann auch eine direkte Regelung der aufgebrachten Schließkraft erfolgen, um eine prozessoptimale Schließkraft in Abhängigkeit vom herrschenden Forminnendruck zu gewährleisten.

Der bewegliche Formeinsatz 2 wird über einen Linearantrieb 14 bewegt, welcher manuell, elektrisch, mechanisch, pneumatisch oder, wie dargestellt, hydraulisch betätigbar sein kann. Der Linearantrieb 14 kann in eine Formkomponente integriert sein und über nicht dargestellte Aggregate angesteuert werden. Die Bewegung des beweglichen Formeinsatzes 2 kann auch über den im Formnest 8 wirksamen Spritzdruck beeinflusst bzw. ausgelöst werden. Ein zweiter Linearantrieb 15, der analog zum Linearantrieb 14 ausgeführt sein kann, ist für die Bewegung des Kernes 10 vorgesehen. Die beiden in Fig. 1 gezeigten Schubkolbenzylinder der Linearantriebe 14, 15 sind über Ventile 14a, 14b sowie 15a, 15b ansteuerbar. Über Kolbenstangen 14c, 15c erfolgt die Verbindung zum beweglichen Formeinsatz 2 bzw. zum Kern 10.

Der als langgestrecktes Bauteil mit rechteckförmigem Querschnitt ausgeführte Kern 10 ist in Längsrichtung von einer Bohrung 16 durchsetzt, welche am stirnseitigen, im Formnest 8 befindlichen Ende des Kerns 10 in ein Gasventil 16a mündet. Am anderen Ende der Bohrung 16 kann über einen Schlauch 17 Druckluft oder ein anderes Gas bzw. eine Flüssigkeit in das Formnest 8 geblasen werden. Dabei kann auch vorgesehen werden, über die Bohrung 16 und ein entsprechendes Ventil das Formnest 8 evakuieren zu können.

Fig. 1 und Fig. 2 zeigen den Ausgangszustand bei bereits geschlossener Form. Das Formnest 8 kann mit Luft gefüllt, mit Schutzgas gespült worden sein oder evakuiert sein. Über die Aufspannplatten 4a, 4b wird die Schließkraft auf die Form aufgebracht.

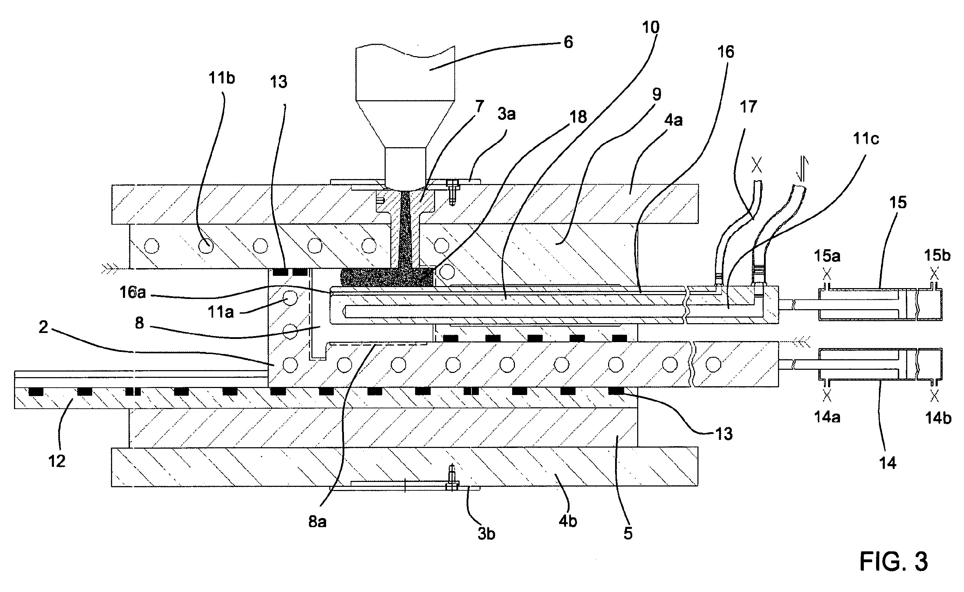

Fig. 3 zeigt den Beginn des Einspritzvorganges. Das Spritzaggregat 6 ist an der Angussbuchse 7 angesetzt und es wurde bereits plastifizierte Masse 18 in das Formnest 8 eingespritzt. Die Ventile 14a, 14b sowie 15a, 15b der Linearantriebe 14, 15 sowie das Gasventil 16a sind geschlossen.

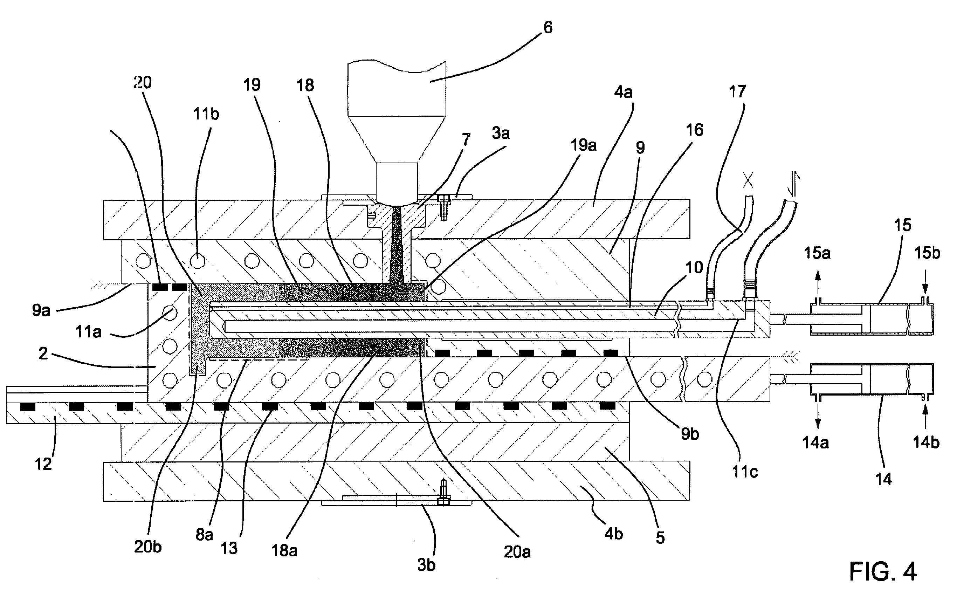

Sobald das ursprüngliche Volumen des Formnestes 8 mit Masse 18 aufgefüllt ist, baut sich im Formnest 8 ein Druck auf, welcher gegen den Widerstand der Linearantriebe 14, 15 und entgegen der von der Schließkraft abhängigen Reibungsverluste eine übereinstimmende Verschiebung des beweglichen Formeinsatzes 2 und des Kerns 10 zur Folge hat. Eine erwünschte und kontrollierte Bewegung des beweglichen Formeinsatzes 2 und des Kerns 10 relativ zum feststehenden Formeinsatz 9, insbesondere entlang der Gleitflächen 9a und 9b gemäß Fig. 4, wird durch eine entsprechende Steuerung bzw. Regelung der Druckverhältnisse im Formnest 8 über das Spritzaggregat 6 sowie eine entsprechenden Steuerung der Linearantriebe 14, 15 gewährleistet. Die Pfeile im Bereich der Ventile 14a, 14b sowie 15a, 15b der Linearantriebe 14, 15 verdeutlichen den Medienfluss zur Steuerung der beiden Linearantriebe 14, 15.

Die eingespritzte Masse, welche beispielsweise eine thermoplastische Schmelze ist, erstarrt sukzessive und ausgehend vom flüssigen Ausgangszustand, welcher durch die mit den Bezugsziffern 18 und 19 versehenen Bereiche versinnbildlicht ist, in Abhängigkeit von Druck, Temperatur und Zeit über den in sich im vergrößernden Formnest 8 zurückgelegten Weg sowie im Bereich der Strömungsschatten 19a, 20a des Formnestes 8. Die Bezugsziffern 19 und 20 kennzeichnen Bereiche der eingespritzten Masse in unterschiedlichen Abkühl- bzw. Erstarrungsstadien. An der Gleitfläche 9a des Formeinsatzes 9 erfolgt eine Relativbewegung zwischen der Spritzmasse 18, 19, 20 und dem Formeinsatz 9, die mit jener beim Formgebungsprozess an einer Extrusionsdüse vergleichbar ist. Am beweglichen Formeinsatz 2 erfolgt keine Relativbewegung zur eingespritzten Masse, was die Ausformung von dreidimensionalen Geometrieelementen 20b und strukturierten Oberflächen 8a ermöglicht. Im Bereich der Angussbuchse 7 und um den Kern 10 wird insbesondere im Bereich 18a plastifiziertes Material nachgefördert und bildet in Fließrichtung kontinuierlich neue Oberflächen, gleichzeitig erfolgt die Verlängerung des entstehenden Spritzlings.

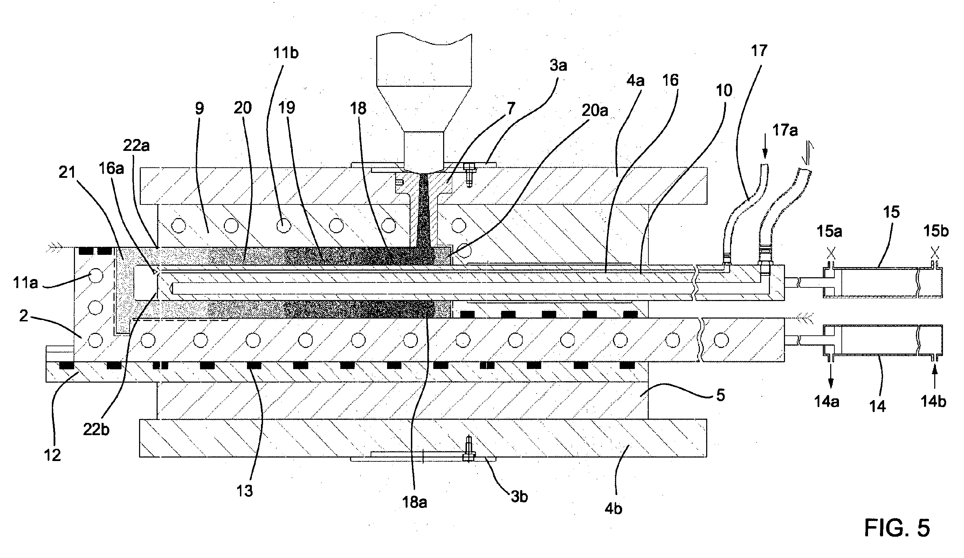

Gemäß Fig. 5 ist schließlich die zuerst zugeführte Masse im Bereich 21 bereits vollkommen erstarrt, sodass, wie ebenfalls Fig. 5 zeigt, dieser Teil des Spritzlings aus der Form austreten kann. Der Bereich 21 löst sich dabei sowohl vom feststehenden Formeinsatz 9 als auch vom Kern 10. Der Linearantrieb 15 des Kerns 10 wird angehalten, indem die Ventile 15a, 15b geschlossen werden. Das Gasventil 16a wird geöffnet, um den entstehenden Hohlraum mit einem Medium 17a, beispielsweise einem Gas wie Luft, Schutzgas oder Prozessgas oder mit einer Flüssigkeit, beispielsweise Wasser oder Öl, zu füllen. Der Druck des einströmenden Mediums kann dabei so gewählt werden, dass die noch nicht vollständig erstarrte Masse im Bereich des entstehenden Hohlraumes vom druckbeaufschlagten Medium bis zur endgültigen Erstarrung gegen die Formwandungen der Formeinsätze 2 und 9 gedrückt wird. Der profilierte Spritzling wird damit unter Ausnutzung des Innendrucks kalibriert.

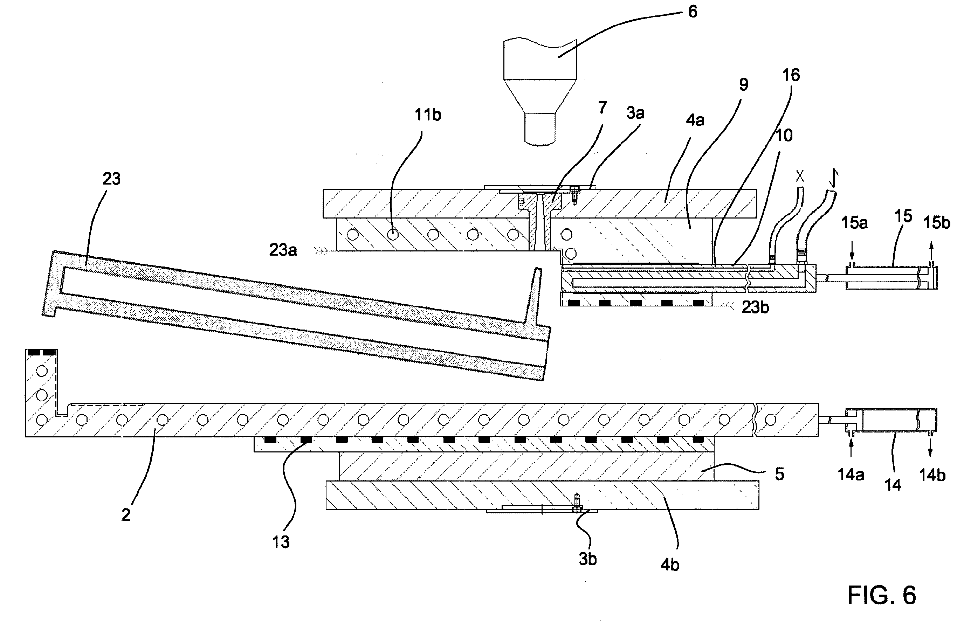

Wenn der derart geformte, profilierte Bauteil (Spritzling) die vorgesehene Länge erreicht hat, wird auch der bewegliche Formeinsatz 2 angehalten, indem die Ventile 14a, 14b des Linearantriebes 14 geschlossen werden. Analog zu einem konventionellen Spritzprozess wird der Spritzzyklus mit einer Nachdruck- und Kühlzeit fortgesetzt bzw. beendet. Das Spritzaggregat 6 wird nach dem Erstarren des Angusses und dem Aufdosieren zurückgefahren. Nach der vollkommenen Erstarrung des profilierten Spritzlings wird der Kern 10 zurückgefahren bis er sich außerhalb des Spritzlings befindet. Nun kann eine Befüllung des Hohlraumes mit einer reaktiven und / oder erstarrenden Flüssigkeit erfolgen. Anschließend wird die Form, wie Fig. 6 zeigt, geöffnet, die Formtrennbereiche sind durch die Bezugsziffern 23a, 23b angedeutet. Zum Auswerfen des Spritzlings 23 können je nach den gegebenen Umständen konventionelle, mechanische, pneumatische, hydraulische oder elektrische Auswurfelemente wirksam werden, die gesondert nicht dargestellt sind. Die Entnahme des Spritzlings 23 kann wie bei konventionellen Spritzverfahren manuell, mit einer entsprechenden Einrichtung oder auch durch freien Fall erfolgen. Abschließend wird durch eine entsprechende Ansteuerung des Linearantriebes 14 der bewegliche Formeinsatz 2 wieder in seine Ausgangsposition zurückgefahren. Auch der Kern 10 wird wieder in seine Ausgangsposition bewegt, sodass nach dem Schließen der Form der Zustand gemäß Fig. 1 wieder erreicht ist und wieder ein Spritzzyklus eingeleitet werden kann.

Das erfindungsgemäße Verfahren unterscheidet sich von den herkömmlichen Spritzgießverfahren insbesondere dadurch, dass nach der Füllung eines ursprünglichen Formnestes 8 dieses kontinuierlich vergrößert wird, wobei der entstehende Spritzling im Bereich der Anbindung des Angusses zur Formkavität hin kontinuierlich anwächst und nicht an der Fließfront, wie es beim herkömmlichen Spritzguss der Fall ist. Während des Einspritzvorganges wird außerdem die bereits eingespritzte und erstarrende Masse vom beweglichen Formeinsatz 2 stetig vom Angussbereich wegbewegt. Durch die Verschiebung des beweglichen Formeinsatzes 2 erhöht sich dabei gleichzeitig das Volumen des Formnestes 8, wodurch ständig Raum für neu zu bildende Bereiche geschaffen wird. Auf diese Weise wächst der Spritzling auf seine endgültige Länge, wobei der für die zugeführte Masse (Schmelze) zurückzulegende Fließweg jedoch zumindest im Wesentlichen konstant bleibt.

Im Unterschied zur Extrusion verläuft der erfindungsgemäße Prozess insofern diskontinuierlich, als dass jeweils Bauteile endlicher und definierter Länge gebildet werden. Es ist möglich, die Länge des gespritzten, profilierten Bauteils in aufeinanderfolgenden Spritzvorgängen zu verändern, ohne an der Form Änderungen oder Umbauarbeiten durchführen zu müssen. Somit lassen sich mit der Erfindung Profile unterschiedlicher Längen sehr wirtschaftlich und auch in geringen Stückzahlen herstellen. Beim Extrusionsverfahren müssen hingegen hohe Anfahrverluste zur Stabilisierung des Prozesses in Kauf genommen werden, was bei einem geringen Laufmeterbedarf eines jeweiligen Profils sehr unwirtschaftlich ist. Stellt man unterschiedlich lange Profile in einem herkömmlichen Spritzgießverfahren her, so sind bei höherer Variantenvielfalt und / oder geringer Stückzahl je Variante die anteiligen Formkosten sehr hoch. Die Erfindung vermeidet diese Nachteile und ermöglicht zusätzlich die Ausformung dreidimensionaler Endbereiche am Spritzling.

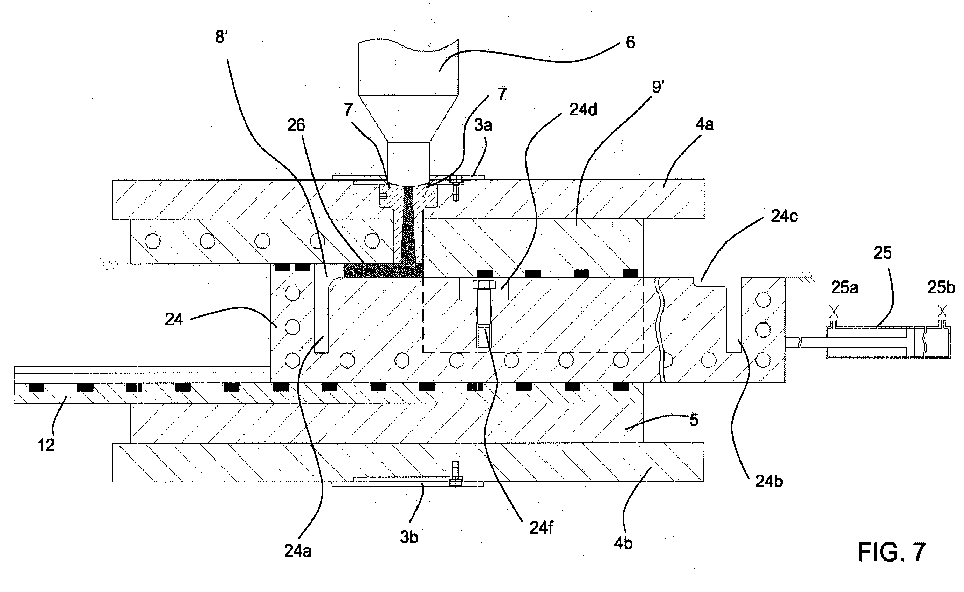

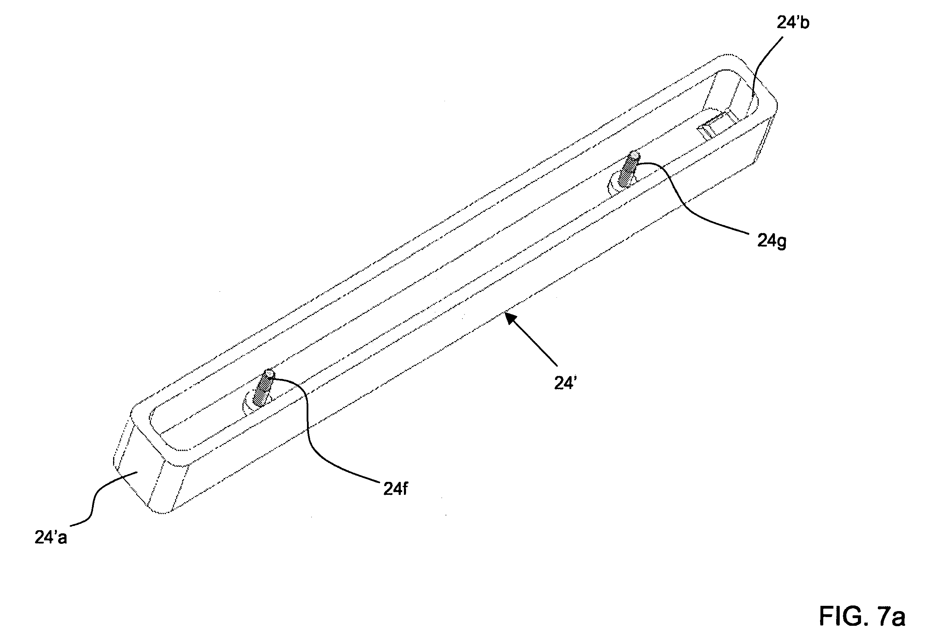

Bei der in Fig. 7 bis 10 dargestellten Variante der Erfindung ist kein beweglicher Kern vorgesehen, sondern lediglich ein beweglicher Formeinsatz 24. Zu den Komponenten des einen Formteils gehören analog zur ersten Ausführungsform eine Aufspannplatte 4a, ein Zentrierring 3a, ein feststehender Formeinsatz 9' und eine Angussbuchse 7. Zu den Bestandteilen des zweiten Formteils gehören im Wesentlichen, übereinstimmend zur ersten Ausführungsform, eine Aufspannplatte 4b, ein Zentrierring 3b und Führungsleisten 12 für den gegenüber dem feststehenden Formeinsatz 9' in Längsrichtung beweglichen Formeinsatz 24, wobei analog zur ersten Ausführungsform entsprechende Gleitelemente, die nicht näher bezeichnet sind, zwischengelegt sind. Der bewegliche Formeinsatz 24 ist derart ausgeführt, dass der in Fig. 7a gezeigte profilierte Bauteil 24 herstellbar ist. Der Bauteil 24 ist ein länglicher Bauteil mit U-förmigem Querschnitt mit stirnseitigen Endkappen 24'a, 24'b. Miteingebunden werden beim Spritzvorgang Schraubteile 24f, 24g für eine nachträgliche Befestigung von Zusatzelementen.

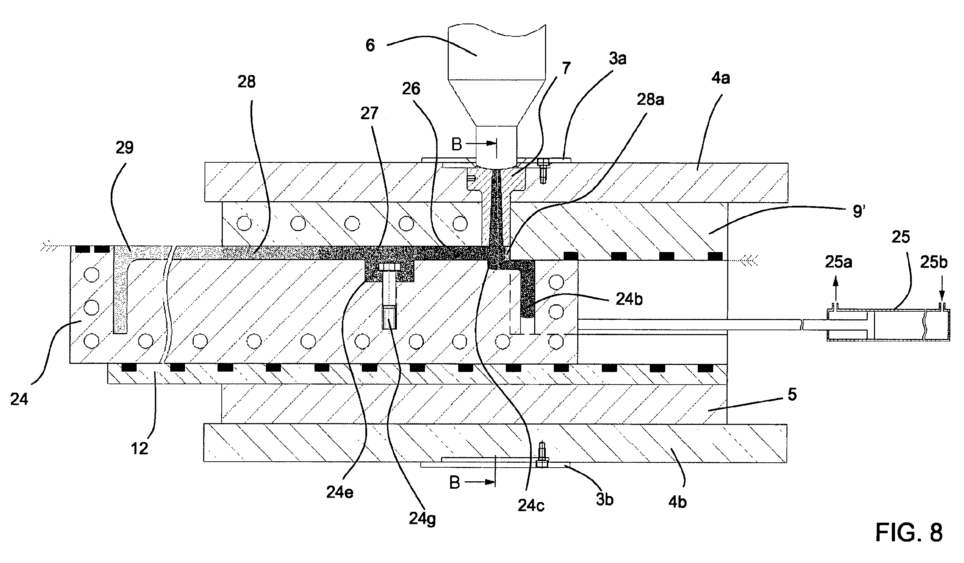

Wie die Zeichnungsfiguren 7 bis 10 zeigen, ist der bewegliche Formeinsatz 24 derart ausgeführt, dass zwei Vertiefungen 24a, 24b zum Bilden der Endkappen 24'a, 24'b und zwei zueinander parallel und in Längserstreckung des Einsatzes 24 verlaufende Rillen 24h vorgesehen sind, in welchen die Längsseiten des Bauteils 24' gebildet werden. Die beiden Schraubteile 24f, 24g sind Einlegeteile, 24f ist in Fig. 7, 24g ist in Fig. 8 gezeigt, die in entsprechenden Ausnehmungen 24d (siehe Fig. 7) sowie 24e (siehe Fig. 8) des Formeinsatzes 24 positioniert werden. Das ursprüngliche Formnest 8' wird zwischen den beiden Formeinsätzen 9', 24 gebildet.

Der bewegliche Formeinsatz 24 wird analog zur Ausführungsform gemäß Fig. 1 bis 6 in entsprechender Wechselwirkung zwischen Druck, Temperatur und Zeit während der Füllung des Formnestes 8' über die Angussbuchse 7 mit plastifizierter Masse 26 gefüllt und über einen analog zum Linearantrieb 14 ausgeführten Linearantrieb 25 bewegt. Die Bezugsziffern 25a und 25b versinnbildlichen die Ventile zur Steuerung des Linearantriebes 25. Die Bewegung des Formeinsatzes 24 wird über den Linearantrieb 25 und die entsprechenden Prozessparameter der Spritzgießmaschine gesteuert.

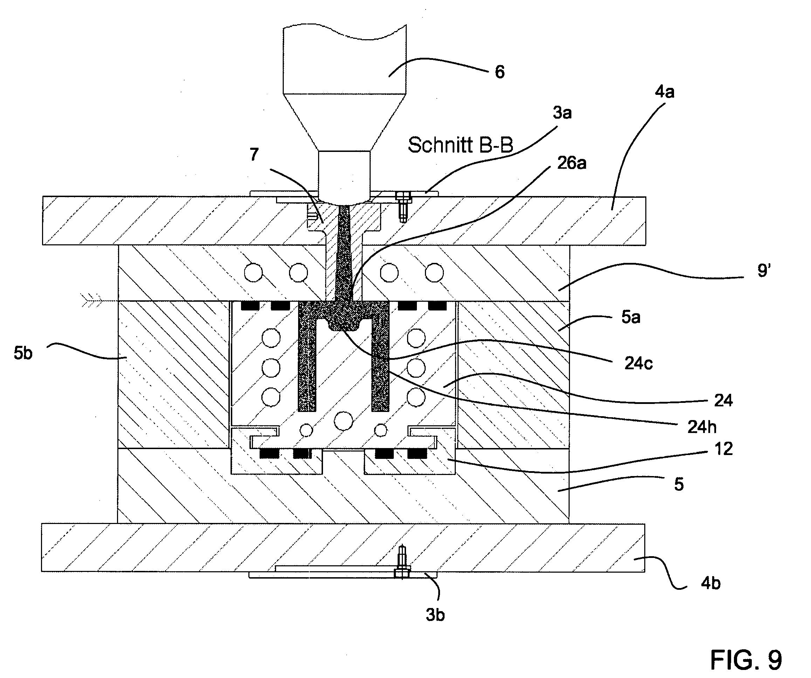

Wie Fig. 8 zeigt erstarrt die Spritzmasse bei fortschreitender Füllung zunehmend, was durch die unterschiedlich schattierten Bereiche 27, 28, 29 versinnbildlicht ist. Dabei ist der zuerst gebildete Bereich 29 des Spritzlings bereits formstabil. Gegen Ende des Spritzvorganges gestattet ein Überlaufbereich 24c am beweglichen Formeinsatz 24 das Auffüllen der Vertiefung 24b zum Bilden der zweiten Endkappe 24'b, trotz bereits weitgehend erstarrter Masse 28a im Strömungsschatten neben dem Anguss. Der Überlaufbereich 24c ist eine Vertiefung an der Innenseite des Formeinsatzes 24, wie es insbesondere Fig. 9 zeigt. Dabei ist die Spritzmasse über den gesamten Querschnitt 26a plastifiziert.

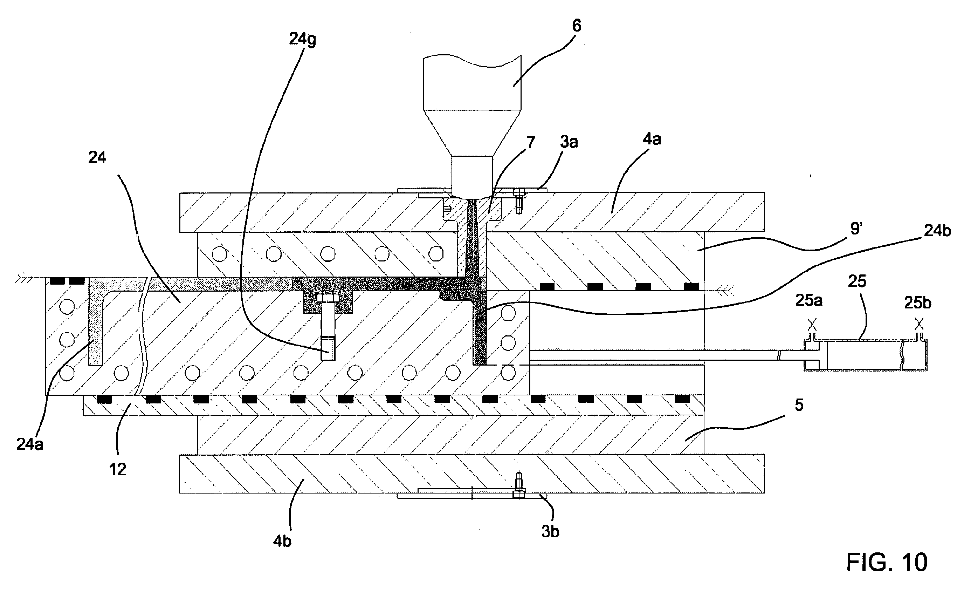

Fig. 10 zeigt schließlich das Ende des Füllvorganges. Der Linearantrieb 25 ist in seiner Endposition, die Ventile 25a, 25b sind geschlossen. Nach dem Erstarren kann die Form geöffnet und der Bauteil 24' ausgeworden werden. Das Zurückfahren des beweglichen Formeinsatzes 24 ist erst nach dem Öffnen der Form möglich. Bei der in Fig. 7 bis 10 gezeigten Ausführungsform ist es ohne weiteres möglich, anders ausgeführte bewegliche Formeinsätze zur Herstellung längerer oder anders profilierter Bauteile zu verwenden. Auch ein modularer Aufbau beweglicher Formeinsätze, beispielsweise über Wechseleinsätze, ist möglich.

Erwähnt sei ferner, dass die bekannten Sonderverfahren und Verfahrensvarianten des üblichen Spritzgießens auch mit dem erfindungsgemäßen Verfahren bzw. den erfindungemäßen Spritzgießformen kombiniert werden können. So kann beispielsweise das Kunststoffmaterial im Kompaktspritzguss und / oder in einem Sonderspritzgussverfahren, wie Spritzprägen, Mehrkomponentenspritzgießen, Dekorhinterspritzen, Gasinjektionstechnik, Stoffhinterspritzen, Umspritztechnik, Schaumspritzguss und dergleichen verwendet werden.

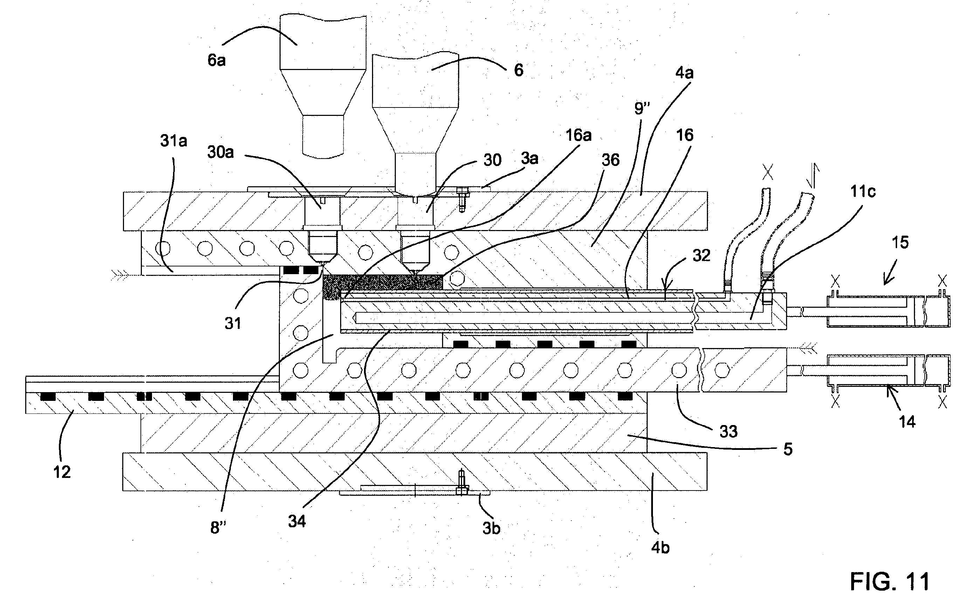

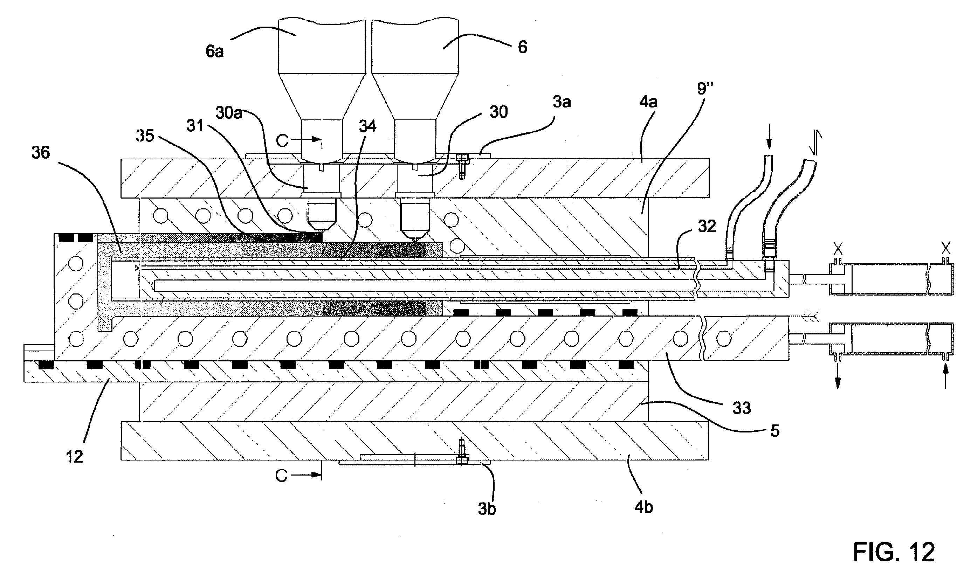

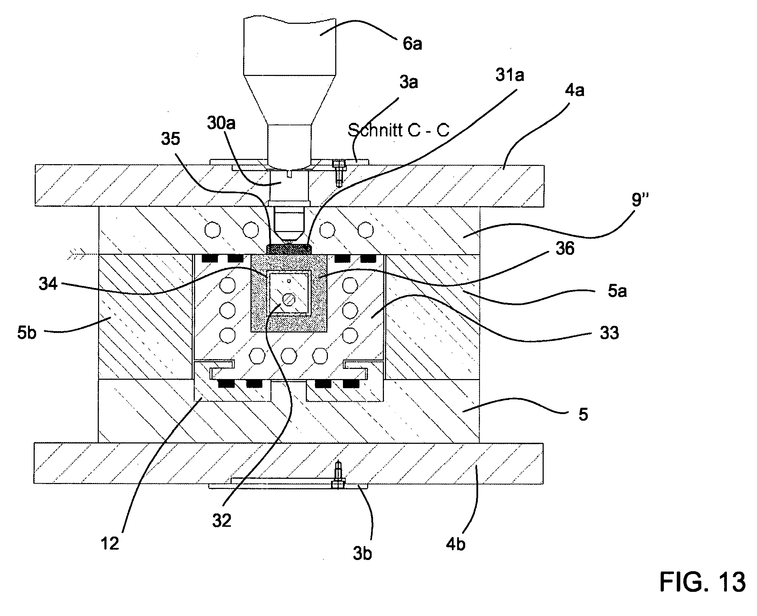

Eine weitere Ausführungsform ist in Fig. 11 bis 14 dargestellt. Einer der beiden Formteile umfasst als Formkomponenten analog zur Ausführung gemäß Fig. 1 bis Fig. 6 eine untere Aufspannplatte 4b, einen unteren Zentrierring 3b, eine Formplatte 5 und Stützleisten 5a und 5b (siehe Fig. 13). Es ist ein beweglicher Formeinsatz 33 vorgesehen, welcher an Führungsleisten 12 unter Zwischenlegung von Gleitelementen in Längsrichtung der Spritzgussform beweglich ist. Zum zweiten Formteil gehören eine obere Aufspannplatte 4a, ein oberer Zentrierring 3a und ein feststehender Formeinsatz 9". Am Formeinsatz 9" ist analog zur Ausführung gemäß Fig. 1 bis 6 ein Kern 32 verschiebbar gelagert. Das ursprüngliche Formnest 8" ist zwischen dem Kern 32 und dem im Querschnitt etwa U-förmig ausgeführten beweglichen Formeinsatz 33 ähnlich zur ersten Ausführungsform gebildet, siehe Fig. 11 und Fig. 13. Anstelle einer einzigen Angussbuchse sind zwei Heißkanaldüsen 30, 30a vorgesehen, welche über jeweils ein Spritzaggregat 6, 6a Masse zuführen. Der Kern 32 ist analog zum Kern 10 der ersten Ausführungsform mit einer Temperierbohrung 11 c, einer Entlüftungsbohrung 16, einem Ventil 16a am stirnseitigen Ende derselben und entsprechenden Zuführleitungen versehen. Der Kern 32 und der bewegliche Formeinsatz 33 sind über Linearantriebe 14, 15 analog zum ersten Ausführungsbeispiel gemäß Fig. 1 bis 6 bewegbar. Auf dem Kern 32 ist ein Hohlprofil 34 als im Querschnitt rechteckförmiges Einlegeteil positioniert. Das Hohlprofil 34 kann beispielsweise ein Metallprofil zur Erhöhung der Steifigkeit des entstehenden Spritzlings sein.

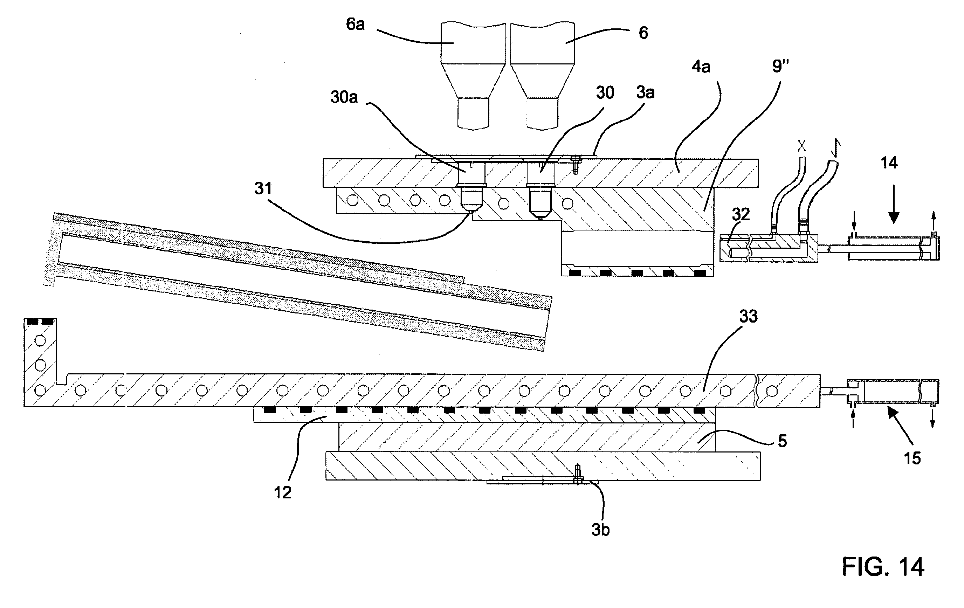

Fig. 11 zeigt die Position der Bauteile zu Beginn des Spritzprozesses während des Einfüllens einer ersten Komponente 36 der plastifizierten Masse über die Heißkanaldüse 30. Unmittelbar nach dem volumetrischen Füllen des Formnestes 8" beginnen sich der Kern 32 und der bewegliche Formeinsatz 33 synchron in Längsrichtung zu verschieben. Dabei wird nach dem Freigeben der Stufe 31 im Formeinsatz 9", welche eine sich in Längsrichtung erstreckende Aussparung 31a begrenzt, die Öffnung zur zweiten Heißkanaldüse 30a freigegeben und ein Einfüllen der zweiten Komponente 35 von plastifizierter Masse zugelassen, wie es insbesondere der Schnitt in Fig. 13 zeigt. Die zweite Komponente wird somit auf die erste Komponente 36 aufgespritzt. Die weiteren Verfahrensschritte verlaufen analog zu jenen gemäß Fig. 3 bis 6, insbesondere auch das Entformen und Auswerfen des gebildeten Zwei-Komponenten-Bauteiles entsprechend Fig. 14.

Die dargestellten und beschriebenen Varianten sind vielseitig variierbar. So kann auch ein Vollprofil oder ein stirnseitig geschlossenes Hohlprofil als Einlegeteil verwendet werden, sofern die Eigensteifigkeit des Einlegeteiles dem Spritzdruck standhält. In diesem Fall wäre ein Kern nicht erforderlich und es kann das Einlegeteil über einen Adapter am hinteren Ende durch den Linearantrieb 15 mit dem profilierten Spritzling mitbewegt werden. Eine Koppelung des Einlegeteiles mit den beweglichen Formeinsatz (sei es durch Reibschluss oder Formschluss) oder eine hinterschnittige Verbindung mit dem Spritzling am vorderen Ende desselben stellen weitere Varianten zur Bewegung des Einlegeteils während des Füllvorganges dar. In diesem Fall ist ein Linearantrieb für das Einlegeteil nicht mehr erforderlich.

Bei sämtlichen Ausführungsvarianten kommt als Formmasse vor allem ein Thermoplast in Frage, der als flüssige Schmelze unter zeitlich definierter Einwirkung von Druck und Temperatur in die Form eingespritzt wird und durch Abkühlen in der Form erstarrt. Das Kunststoffmaterial kann auch eine reaktive Flüssigkeit, beispielsweise ein Duroplast oder ein Elastomer sein, die in analoger Weise wie eine Thermoplastschmelze in die Form eingespritzt werden, jedoch durch Reaktion erstarren. Möglich ist auch die Verwendung einer plastifizierbaren keramischen oder metallischen Formmasse.

Das Verfahren ist dafür besonders gut geeignet, Bauteile aus thermoplastischen Formmassen herzustellen, die mit Langfasern, insbesondere Langglasfasern verstärkt sind. Die das erfindungsgemäße Verfahren auszeichnenden kurzen Fließwege sowie die geringe Anzahl von Anbindungen pro Formnest ergibt im Vergleich zum herkömmlichen Spritzgießen eine geringere mechanische Belastung der Formmasse. Die Langfasern bleiben daher gut erhalten.

Der Verfahrensdruck beim Einspritzen kann dem üblichen Spritzdruck entsprechen und etwa im Bereich zwischen 10 bar und 2.500 bar, die an der Spritzgießmaschine eingestellt werden, liegen. Typische Forminnendrücke sind zwischen 50 bar und 1.400 bar. Beim Spritzgießen von Thermoplasten liegen die Temperaturen der Schmelze im Bereich von +130 °C bis +400 °C. Reaktive Systeme (Duroplaste, Elastomere) werden auch bei Temperaturen verarbeitet, die darunter liegen, bis in den Bereich von Raumtemperatur. Bei Metallspritzguss sind Temperaturen bis zu +650 °C möglich.

Das erfindungsgemäße Verfahren und die erfindungsgemäße Vorrichtung bieten die Möglichkeit, in Analogie zu üblichen, bekannten Spritzgießverfahren alle Arten von dekorativen oder funktionellen metallischen, keramischen und sonstigen Einlegeteilen zu verwenden, beispielsweise Gewindebuchsen, polymere Folien oder Filme, Textilien, Echtholzfurniere, Metallfolien oder Kautschukfolien. Diese Aufzählung erhebt keinen Anspruch auf Vollständigkeit, und es wird auf den Stand der Technik im Bereich der Spritzgusssonderverfahren verwiesen.

Werden statt der beiden Führungsleisten 12 Führungsleisten verwendet, die über Linearantriebe bewegbar sind und normal zur Bewegungsrichtung des beweglichen Formeinsatzes verschiebbar sind, ergibt sich für den herstellbaren Formkörper ein zusätzlicher Freiheitsgrad der Ausbildung normal zur Hauptrichtung des Bauteiles. Dadurch ist die Möglichkeit gegeben, im Rahmen der Abmessungen des Formenbaues, profilähnliche Bauteile mit einem nicht linearen Extrusionspfad herzustellen. Auf diese Weise können kontinuierlich gekrümmte Profile oder Profile mit winkeligen Übergangsbereichen, beispielsweise Bilderrahmen und Bauteile mit plattenförmiger Geometrie, hergestellt werden.

Eine weitere Möglichkeit zur Herstellung von gekrümmten Profilen ergibt sich durch die Verwendung von gekrümmten, beweglichen Formeinsätzen. Dabei kann der bewegliche Formeinsatz von einem Linearantrieb der beschriebenen Art beispielsweise entlang einer Kreisbahn, relativ zu den feststehenden Formkomponenten, verschoben werden. Die Kreisbahn verläuft in einer Ebene, die durch die Hauptrichtung des Bauteils sowie die Öffnungsrichtung der Formteile definiert wird. Die Bahnebene kann sowohl parallel als auch normal zur Trennebene liegen. Im Gegensatz zu dem in zwei Richtungen verschiebbaren Formeinsatz sind hier die herstellbaren Geometrien auf eine kreisbogenförmige Grundgeometrie beschränkt.

Mögliche Einsatzgebiete für das erfindungsgemäße Verfahren ergeben sich in allen Anwendungsbereichen, in welchen Kunststoff und andere plastisch formbare Materialien zu Bauteilen und Produkten mit gestreckten Geometrien verarbeitet werden. Gestreckt bedeutet hier, dass diese Bauteile eine große Länge im Verhältnis zu ihrer Querschnittfläche, die durch Breite und Höhe bestimmt wird, aufweisen. Herstellbar sind vor allem alle Arten von Profilen, die im Gegensatz zur Extrusion bereits nach der Herstellung eine endliche Länge aufweisen und in Teilbereichen, insbesondere an den Enden, eine vom Profilquerschnitt abweichende Geometrie besitzen. Neben den oben bereits angeführten Beispielen kommen Sportgeräte, Freizeitartikel (beispielsweise Skibauteile, Schirmstiele, Zeltbauteile, Bootkomponenten, Gleitschienen), Büroartikel (beispielsweise Lineale, Ordnerrücken, Heftleisten), Fenster- und Türelemente (Profile mit angespritzten Verbindungs- und Funktionselenenten wie Eckverbinder, Führungsschienen, Zierleisten, Sprossen), Möbelkomponenten (Ladenblenden, Fächerträger und - leisten, Führungsschienen, Dekorleisten, Griffleisten, Betteneinsätze, Trägerrahmen, Bilderrahmen), Produkte für den Bau und die Raumausstattung (Lampenabdeckungen, Elemente für Zäune, Treppen- und Balkongeländer, Sockelleisten, Bilderrahmen, Türverkleidungen, medienführende Rohrsegmente, Elemente für Fahrtreppen und Lifte, Stützelemente), Spielzeug (beispielsweise funktionelle Schienen, Schläger), funktionelle und dekorative Elemente für Fahrzeuge (beispielsweise Zierleisten, A-Säulenabdeckungen, Einstiegsleisten), Werkzeug (beispielsweise Stiele, Leiterkomponenten), Transportmittel und Verpackungsgüter (Trägerleisten, Palettenkomponenten, Schutzleisten, etc.) sowie Maschinenkomponenten und Transportmittel (beispielsweise Gleitleisten, Zahnleisten, Griffleisten, Dekorblenden, Lichtblenden, funktionelle Dichtprofile, Wellen, Führungsschienen, Schutzleisten, Trägerleisten, Zierleisten) in Betracht.

## Patentansprüche

1. Verfahren zum Herstellen profilierter, zumindest abschnittsweise länglicher Bauteile aus flüssigen oder zähflüssigen und erstarrenden Formmassen unter Verwendung einer Spritzgießform, wobei die Formmasse in ein Formnest (8, 8', 8")eingespritzt wird, nach dem Auffüllen des Formnests (8, 8', 8") unter fortgesetztem Einspritzen die zuvor eingespritz Formmasse unter Ausdehnung eines formgebenden Bereiches und unter Verlängerung des zu bildenden Bauteils stetig wegtransportiert wird, wobei die wegtransportierte erstarrte Formasse aus der Form heraus transportiert wird, wobei Formmasse solange eingespritzt wird bis das zu bildende Bauteil seine endgültige Länge erreicht hat, wobei die Formmasse von einem beweglichen Formeinsatz (2, 24, 33) wegtransportiert wird, welcher einen äußeren Umfangsbereich des Bauteils formt und mitbildet, und gemeinsam mit erstarrter Formmasse aus der Spritzgießform austritt
**dadurch gekennzeichnet,**
**dass** der bewegliche Formeinsatz (2, 24, 33) einen äußeren Umfangsbereich des Bauteils formt, welcher sich über die gesamte Länge des Bauteils erstreckt.

2. Verfahren nach Anspruch 1, **dadurch gekennzeichnet, dass** der bewegliche Formeinsatz (2, 24, 33) in eine Richtung linear bewegt wird und /oder entlang gekrümmter und/oder mit Ecken versehener Bahnen bewegt wird.

3. Verfahren nach Anspruch 1, **dadurch gekennzeichnet, dass** mittels eines beweglichen Kernes (10, 32) im gebildeten Bauteil ein Hohlraum ausgebildet wird, wobei das ursprüngliche Formnest (8, 8") vom Kern (10, 32) mitgebildet wird.

4. Verfahren nach einem der Ansprüche 1 bis 3, **dadurch gekennzeichnet, dass** nach dem Auffüllen des ursprünglichen Formnestes (8, 8', 8") die Bewegung des beweglichen Formeinsatzes (2, 24, 33) und / oder des Kerns (10, 32) durch den Druck der eingefüllten Formmasse beeinflusst und / oder ausgelöst wird.

5. Verfahren nach Anspruch 3 oder 4, **dadurch gekennzeichnet, dass** der Kern (10, 32) zumindest teilweise synchron und übereinstimmend zur Bewegung des beweglichen Formeinsatzes (2, 24, 33) bewegt wird.

6. Verfahren nach einem der Ansprüche 3 bis 5, **dadurch gekennzeichnet, dass** der bewegliche Formeinsatz (2, 24, 33) und der Kern (10, 32) über Linearantriebe (14, 15, 25) angetrieben und gesteuert werden, wobei die Linearantrieb(e) (14, 15, 25) durch vorgegebene Prozessparameter geregelt und gesteuert werden.

7. Verfahren nach einem der Ansprüche 1 bis 6, **dadurch gekennzeichnet, dass** bereits erstarrte Bereiche des gebildeten Bauteils gemeinsam mit dem und durch den beweglichen Formeinsatz (2, 24, 33) unter Loslösung vom feststehenden Formeinsatz (9, 9', 9") und, falls vorhanden, unter Loslösung vom Kern (10, 32), aus der Form austreten.

8. Verfahren nach einem der Ansprüche 1 bis 7, **dadurch gekennzeichnet, dass** nach dem Bilden des Bauteils in der vorgesehenen Länge der bewegliche Formeinsatz (9, 9', 9") angehalten wird, wobei nach dem Auswerfen des Bauteils der bewegliche Formeinsatz (9, 9', 9") in seine Ausgangslage zurückgefahren wird.

9. Verfahren nach einem der Ansprüche 1 bis 8, **dadurch gekennzeichnet, dass** zumindest zwei Angussstellen vorgesehen sind, über welche insbesondere unterschiedliche Formmassen zuführbar sind, wobei über eine dieser Angussstellen (3b) das ursprüngliche Formnest (8"') aufgefüllt wird und die Öffnung(en) zu der oder den weiteren Angussstelle(n) sukzessive während der Ausdehnung des Formnestes durch den beweglichen Formeinsatz (9, 9', 9") freigegeben wird bzw. werden.

10. Spritzgießform zum Herstellen profilierter, zumindest abschnittsweise länglicher Bauteile aus flüssigen oder zähflüssigen und erstarrenden Formmassen, wobei die Spritzgießform zwei schließ- und öffenbare, jeweils mehrere Formkomponenten aufweisende Formteile umfasst, welche zumindest ein mit der Formmasse über zumindest eine Ausgussstelle füllbares Formnest bilden, wobei in der Form zumindest ein das Formnest mitbildender Formeinsatz in Richtung der Erstreckung des zu bildenden Bauteils beweglich gelagert ist, welcher einen äußeren Umfangsbereich des Bauteils formt und mitbildet, derart, dass über eine Bewegung des Formeinsatzes (2,24,33) das Bauteil inner- und außerhalb der Form in der vorgesehenen Größe und Gestellt herstellbar ist
**dadurch gekennzeichnet,**
**dass** der bewegliche Formeinsatz (2, 24, 33) einen äußeren Umfangsbereich des Bauteils formt, weicher sich über die gesamte Länge des Bauteils erstreckt und an Führungsleisten (12) gelagert ist, sodass er in seiner Ausgangsposition das ursprünglich geschlossene Formnest (8, 8', 8") mitbildet und in seiner Endposition gemeinsam mit erstarrter Formmasse aus der Form austritt.

11. Form nach Anspruch 10, **dadurch gekennzeichnet, dass** der bewegliche Formeinsatz (2, 24, 33) an einem der beiden Formteile entweder in einer Richtung oder in zwei normal zueinander verlaufenden Richtungen verschiebbar angeordnet ist.

12. Form nach Anspruch 10 oder 11, **dadurch gekennzeichnet, dass** am anderen Formteil ein feststehender Formeinsatz (9, 9', 9") angeordnet ist, welcher gemeinsam mit dem beweglich angeordneten Formeinsatz (2, 24, 33) und gegebenenfalls gemeinsam mit einem am feststehenden Formeinsatz (9, 9") beweglich angeordneten Kern (10, 32), das ursprüngliche Formnest (8, 8', 8") und einen sich ausdehnenden formgebenden Bereich bildet, wobei der Kern (10, 32) vorzugsweise am feststehenden Formeinsatz (9, 9") in Ausdehnungsrichtung des Bauteils verschiebbar gelagert ist und zur Bildung eines Hohlraumes im Bauteil in das Formnest (8, 8") ragt oder in dieses einfahrbar ist.

13. Form nach einem der Ansprüche 10 bis 12, **dadurch gekennzeichnet, dass** der beweglich angeordnete Formeinsatz (2, 24, 33) und der Kern (10, 32) über Linearantriebe (14, 15, 25) steuer- und antreibbar sind und vorzugsweise linear bewegbar sind.

14. Form nach Anspruch 10, **dadurch gekennzeichnet, dass** die Führungsleisten (12) in einer positionsfest angeordneten Formplatte eingesetzt sind.

15. Form nach einem der Ansprüche 10 bis 14, **dadurch gekennzeichnet, dass** zwei oder mehr Angussstellen (30, 30a) zum Zuführen unterschiedlicher Formmassen vorgesehen sind, welche Angussstellen (30, 30a) während der Bewegung des beweglichen Formeinsatzes (33) schrittweise freigebbar sind.

16. Form nach einem der Ansprüche 10 bis 15, **dadurch gekennzeichnet, dass** am beweglichen Formeinsatz (24) und/oder im Formnest zumindest ein Einlegeteil positionierbar ist.

17. Form nach Anspruch 10, **dadurch gekennzeichnet, dass** Formnestoberflächen (8a), die keine Relativbewegung zur Formmasse während des Spritzgießens durchführen, dreidimensional strukturiert sind.

## Claims

1. Method for making profiled components that are elongate at least in sections from liquid or semiliquid and solidifying molding compounds using an injection mold, whereby molding compound is injected into a mold cavity (8, 8', 8"), after filling of the mold cavity (8, 8', 8") with continued injection,the previously injected molding compound, under expansion of a shaped region and extension of the components to be formed, is transported away, whereby the solidifying molding compound that is transported away is transported out of the mold, whereby the molding compound is injected until the component to be formed have reached its final length, whereby the molding compound is transported away by a moveable mold insert (2, 24, 33), which forms and co-forms an outer peripheral region of the component, and together with the solidified mold compound discharges from the injection mold,
**characterized in that**
the moveable mold insert (2, 24, 33) forms an outer peripheral region of the component, which extends over the entire length of the component.

2. Method according to claim 1, **characterized in that** the moveable mold insert (2, 24, 33) is moved linearly in one direction and/or is moved along curved tracks and/or along tracks provided with corners.

3. Method according to claim 1, **characterized in that** by means of a moveable core (10, 32) in the formed component, a hollow chamber is formed, whereby the original mold cavity (8, 8") is co-formed from the core (10, 32).

4. Method according to one of claims 1 through 3, **characterized in that** after filling of the original mold cavity (8, 8', 8'''), the movement of the moveable mold insert (2, 24, 33) and/or of the core (10, 32) is influenced or triggered by the pressure of the filled mold compound.

5. Method according to claim 3 or 5, **characterized in that** the core (10, 32) is moved at least partially synchronously and corresponding to the movement of the moveable mold insert (2, 24, 33).

6. Method according to one of claims 3 through 5, **characterized in that** the moveable mold insert (2, 24, 33) and the core (10, 32) are driven and controlled via linear drives (14, 15, 25), whereby the linear drives (14, 15, 25) are regulated and controlled by preset process parameters.

7. Method according to one of claims 1 through 6, **characterized in that** the already solidified regions of the formed component together with and by means of the moveable mold insert (2, 24, 33) with disengagement of the fixed mold insert (9, 9', 9''), and if necessary, with disengagement of the core (10, 32), is discharged from the mold.

8. Method according to one of claims 1 through 7, **characterized in that** after formation of the component in the predetermined lengths, the moveable mold insert (9, 9', 9'') is retained, whereby after ejection of the component, the moveable mold insert (9, 9', 9'') is moved back into its starting position.

9. Method according to one of claims 1 through 8, **characterized in that** at least two gate locations are provided, by means of which inparticular different molding compounds are suppliable, whereby via one of these gate locations (3b), the original mold cavity (8''') is filled and the opening(s) to the further gate location(s)are released successively during expansion of the mold cavity by means of the moveable mold insert (9, 9', 9'').

10. Injection mold for making profiled components that are elongate at least in sections from liquid or semiliquid molding compounds, whereby the injection mold includes at least two closeable and openable mold parts having respective multiple mold components, which form at least one mold cavity fillable by the molding component via at least one gate location, whereby in the mold, at least one mold insert formed together with the form cavity is positioned moveably in the direction of the extension of the component to be formed, which forms and co-forms an outer peripheral region of the component, such that via a movement of the mold insert (2, 24, 33), the component can be made within and outside of the mold in the designated sizes and shapes,
**characterized in that**
the moveable mold insert (2, 24, 33) forms an outer peripheral region of the component, which extends over the entire length of the component and is mounted on guide rails (12) so that it forms together in its starting position the original closed mold cavity (8, 8', 8'') and in its end position, together with solidified molding component, discharges from the mold.

11. Mold according to claim 10, **characterized in that** the moveable form insert (2, 24, 33) is displaceably disposed on one of the two mold parts either in one direction or in two directions running normal to one another.

12. Mold according to claim 10 or 11, **characterized in that** on other mold parts, a fixed mold insert (9, 9', 9'') is disposed, which together with the moveably arranged mold insert (2, 24, 33) and if necessary, together with a core (10, 32) moveably disposed on the fixed mold insert (9', 9''), forms the original form cavity (8, 8', 8") and an expanding shaping region, whereby the core (10, 32) preferably is displaceably positioned on the fixed mold insert (9, 9") in an expansion direction of the component and for formation of a hollow chamber in the component, projects into the form cavity (8, 8'') or is retractable into this.

13. Mold according to one of claims 10 through 12, **characterized in that** the moveably disposed mold insert (2, 24, 33) and the core (10, 32) are controllable and drivable via linear drives (14, 15, 25) and are preferably linearly moveable.

14. Mold according to claim 10, **characterized in that** the guide rails (12) are inserted in a fixedly arranged die plate.

15. Mold according to one of claims 10 through 14, **characterized in that** two or more gate locations (30, 30a) are provided for supplying different molding compounds, which gate locations (30, 30a) are successively releasable during the movement of the moveable mold insert (33).

16. Mold according to one of claims 10 through 15, **characterized in that** at least one insert is positionable on the moveable mold insert (24) and/or in the mold cavity.

17. Mold according to claim 10, **characterized in that** mold cavity surfaces (8a), which execute no relative movement to the molding component during the injection molding, are structured three-dimensionally.

## Revendications

1. Procédé de fabrication d'éléments de construction profilés, au moins oblongs par portions, en matières de moulages liquides ou visqueuses et durcies, en utilisant un moule de moulage par injection, la masse de moulage étant injectée dans une cavité de moule (8, 8', 8"), après chargement de la cavité de moule (8, 8', 8") en poursuivant l'injection, la masse de moulage préalablement injectée étant évacuée sous extension d'une zone de façonnage et sous élongation de l'élément de construction à créer, la masse de moulage évacuée étant évacuée hors du moule, la masse de moulage étant injectée jusqu'à ce que l'élément de construction à créer ait atteint sa longueur définitive, la masse de moulage étant évacuée par un insert de moule mobile (2, 24, 33) lequel forme et co-réalise une zone périphérique extérieure de l'élément de construction et sort du moule de moulage par injection en commun avec la masse de moulage durcie, **caractérisé en ce que** l'insert de moule mobile (2, 24, 33) forme une zone extérieure de l'élément de construction, laquelle s'étend sur toute la longueurs de l'élément de construction.

2. Procédé selon la revendication 1, **caractérisé en ce que** l'insert de moule mobile (2, 24, 33) est déplacé de façon linéaire dans une direction et/ou déplacé le long de trajectoires curvilignes et/ou munies d'angles.

3. Procédé selon la revendication 1, **caractérisé en ce qu'**au moyen d'un noyau mobile (10, 32), il est conçu dans l'élément de construction créé un espace creux, la cavité initiale du moule (8, 8'') étant co-réalisée par le noyau (10, 32).

4. Procédé selon l'une quelconque des revendications 1 à 3, **caractérisé en ce qu'**après le chargement de la cavité initiale du moule (8, 8', 8''), le déplacement de l'insert de moule mobile (2, 24, 33) et / ou du noyau (10, 32) est influencé et/ou déclenché par la pression de la masse de moulage chargée.

5. Procédé selon la revendication 3 ou 4, **caractérisé en ce que** le noyau (10, 32) est déplacé de façon au moins en partie synchrone et concordante au déplacement de l'insert de moule mobile (2, 24, 33).

6. Procédé selon l'une quelconque des revendications 3 à 5, **caractérisé en ce que** l'insert de moule mobile (2, 24, 33) et le noyau (10, 32) sont entraînés et commandés par l'intermédiaire d'entraînements linéaires (14, 15, 25), les entraînement(s) linéaire(s) (14, 15, 25) étant réglés et commandés par des paramètres de processus prédéfinis.

7. Procédé selon l'une quelconque des revendications 1 à 6, **caractérisé en ce que** des zones d'ores et déjà durcies de l'élément de construction créé sortent du moule avec et à travers l'insert de moule (2, 24, 33) mobile, en détachant l'insert de moule fixe (9, 9', 9'') et s'il est présent, en détachant le noyau (10, 32).

8. Procédé selon l'une quelconque des revendications 1 à 7, **caractérisé en ce qu'**après la création de l'élément de construction, l'insert de moule mobile (9, 9', 9'') est arrêté, après éjection de l'élément de construction, l'insert de moule mobile (9, 9', 9'') étant ramené dans sa position initiale.

9. Procédé selon l'une quelconque des revendications 1 à 8, **caractérisé en ce qu'**il est prévu au moins deux points d'injection, via lesquels il est possible d'alimenter notamment deux différentes masses de moulage, la cavité de moule initiale (8''') étant chargée via l'un de ces points d'injection et l'orifice (les orifices) donnant sur le ou les autre(s) point(s) d'injection étant libéré(s) successivement pendant l'extension de la cavité de moule par l'insert de moule mobile (9, 9', 9'').

10. Moule de moulage par injection pour fabriquer des éléments de constructions profilés, au moins oblongs par portions en masse de moulage liquide ou visqueuse et durcissante, le moule de moulage par injection comprenant deux éléments de moule susceptibles de s'ouvrir et de se fermer, comportant chacun plusieurs composants de moule, lesquels forment au moins une cavité de moule susceptible d'être chargée avec la masse de moulage par l'intermédiaire d'au moins un point d'injection, un insert de moule co-réalisant la cavité de moule, lequel forme et co-réalise une zone périphérique extérieure de l'élément de construction, de sorte que par un déplacement de l'insert de moule (2, 24, 33), l'élément de construction est susceptible d'être fabriqué à l'intérieur et à l'extérieur du moule dans les dimensions et conformations prévues étant logé de façon mobile dans le sens d'extension de l'élément de construction à créer, **caractérisé en ce que** l'insert de moule mobile (2, 24, 33) forme une zone périphérique extérieure de l'élément de construction, laquelle s'étend sur toute la longueur de l'élément de construction et est logé sur des baguettes de guidage (12), de sorte que dans sa position initiale, il co-réalise la cavité de moule (8, 8', 8'') initialement fermée et que dans sa position finale, il sorte du moule en commun avec la masse de moulage durcie.

11. Moule selon la revendication 10, **caractérisé en ce que** l'insert de moule mobile (2, 24, 33) est disposé sur l'un des deux éléments de moule en étant déplaçable soit dans un sens ou dans deux sens normalement convergents.

12. Moule selon la revendication 10 ou 11, **caractérisé en ce que** sur l'autre élément de moule est disposé un insert de moule fixe (9, 9' , 9'') qui en commun avec l'insert de moule mobile (2, 24, 33) et le cas échéant avec un noyau (10, 32) disposé de façon mobile sur l'insert de moule fixe (9, 9'') forme la cavité de moule initiale (8, 8', 8") et une zone de façonnage extensible, le noyau (10, 32) étant logé de préférence sur l'insert de moule fixe (9, 9") en étant déplaçable dans le sens d'extension de l'élément de construction et saillant dans la cavité de moule (8, 8") ou étant susceptible de pénétrer dans cette dernière pour former un espace creux dans l'élément de construction.

13. Moule selon l'une quelconque des revendications 10 à 12, **caractérisé en ce que** l'insert de moule (2, 24, 33) disposé de façon mobile et le noyau (10, 32) sont susceptibles d'être commandés et entraînés via des entraînements linéaires (14, 15, 25) et sont déplaçables de préférence de façon linéaire.

14. Moule selon la revendication 10, **caractérisé en ce que** les baguettes de guidage (12) sont insérées dans une plaque-modèle disposée de façon stationnaire.

15. Moule selon l'une quelconque des revendications 10 à 14, **caractérisé en ce que** deux points d'injection (30, 30a) ou plus sont prévus pour alimenter différentes masses de moulage, lesquels points d'injection (30, 30a) sont susceptibles d'être libérés par étape pendant le déplacement de l'insert de moule mobile (33).

16. Moule selon l'une quelconque des revendications 10 à 15, **caractérisé en ce qu'**au moins une pièce d'insertion est positionnable sur l'insert de moule mobile (24) et/ou dans la cavité de moule.

17. Moule selon la revendication 10, **caractérisé en ce que** des surfaces de cavité de moule (8a), qui n'effectuent aucun déplacement relatif par rapport à la masse de moulage pendant le moulage par injection sont structurées en trois dimensions.
